# EUROPÄISCHE PATENTSCHRIFT

(11) **EP 0 945 371 B1**
(45) Veröffentlichungstag und Bekanntmachung des Hinweises auf die Patenterteilung: **23.07.2003**
(21) Anmeldenummer: 99105614.4
(22) Anmeldetag: 19.03.1999
(51) Int. Cl.: B65G 1/14

(54) **Stapelsäulen**
Stacking columns
Colonnes de stockage

(30) Priorität: 21.03.1998 DE 29805178 U
(43) Veröffentlichungstag der Anmeldung: 29.09.1999
(73) Patentinhaber: MTS Maschinenbau GmbH, 88512 Mengen (DE)
(72) Erfinder: Strobel, Gustav, 88348 Saulgau (DE)
(74) Vertreter: Weiss, Peter, Dr.

(56) Entgegenhaltungen:
- DE-A- 3 619 688
- DE-U- 9 408 344
- DE-U- 29 713 563

## Beschreibung

Die Erfindung betrifft eine Stapelsäule zum Lagern von Lagergütern über- oder nebeneinander auf Klinken, welche einen Tragarm und einen Steuerarm aufweisen, wobei der Steuerarm jeder Klinke versetzt zum Tragarm angeordnet ist und die Steuerarme aufeinander folgender Klinken versetzt zueinander angeordnet sind.

Derartige Stapelsäulen sind in vielfältiger Form und Ausführung bekannt und auf dem Markt. Verwendet werden Stapeläulen vor allem bei der Herstellung von Karosserieteilen in der Automobilindustrie. Die entsprechenden Karosserieteile werden über Roboter aus den Pressen genommen und vor einer Weiterverarbeitung in Stapelsäulen zwischengelagert. In der Regel sind vier Stapelsäulen im Rechteck aufgestellt. Jede Stapelwäule besitzt eine Vielzahl von Klinken, die übereinander angeordnet sind. Eine erste Klinke befindet sich in Bereitschaftsstellung. Wird ein Lagergut auf diese Klinke aufgelegt, schwenkt die Klinke in Arbeitsstellung und nimmt dabei eine nachfolgende Klinke mit, die auf diese Weise in Bereitschaftsstellung gelangt. Eine derartige Stapelsäule ist beispielsweise aus der DE 38 11 310 C2 bekannt.

Ferner gibt es auch horizontale Stapelsäulen, wie sie beispielsweise in der DE 40 20 664 A aufgezeigt sind und die einer ähnlichen Funktion dienen.

Eine Stapelsäule der o.g. Art ist aus der DE 36 19 688 A1 bekannt. Dort ist bei jedem Klinkenhebel der Steuerarm gegenüber dem Tragarm in Richtung der Achse seitlich versetzt und zwar von Klinkenhebel zu Klinkenhebel abwechselnd nach vorn und nach hinten, so dass der Steuerarm eines unteren Klinkenhebels jeweils am Steuerarm eines darüberliegenden Klinkenhebels vorbeigelangen kann.

Bei all diesen Stapelsäulen sind die aufeinander folgenden Klinken abwechselnd nebeneinander angeordnet, so dass die entsprechenden Tragarme aufeinander folgender Klinken versetzt zueinander liegen. Dies hat zur Folge, dass die Tragarme aufeinander folgender Klinken das zu lagernde Gut an unterschiedlichen Stellen unterlegen. Je nach dem zu lagernden Gut kann sich diese unterschiedliche Anordnung der Tragarme im Verhältnis zu einer Stapelsäule negativ auswirken, da eine gleichförmige Lagerung der Lagergüter gewünscht wird.

Der vorliegenden Erfindung liegt die Aufgabe zugrunde, eine Stapelsäule der o.g. Art zu schaffen, welche diesen Nachteil beseitigt, d.h., Tragarme vorsieht, die das Lagergut immer an der gleichen Stelle untergreifen.

Zur Lösung dieser Aufgabe führt, dass die Tragarme der Klinken in etwa in einer Ebene übereinander angeordnet sind.

Dies hat den wesentlichen Vorteil, dass bei Anordnung von zwei unterschiedlichen Klinken aufeinander folgend die Tragarme in etwa in einer Ebene liegen, so dass sie die Lagergüter immer an denselben Stellen untergreifen. Bei den zwei unterschiedlichen Klinkenarten sind jeweils die Steuerarme linksseitig oder rechtsseitig versetzt.

Eine Folge der vorliegenden Erfindung ist jedoch auch, dass bei der Verwendung von nur einer Klinkenart in einer Stapelsäule relativ weit von einander versetzte Tragarme aufeinander folgend angeordnet werden können, was dann wünschenswert ist, wenn beispielsweise zwei unterschiedlich geformte Lagergüter auf einander folgend gestapelt werden sollen. Dies ist jedoch nur ein Nebeneffekt der vorliegenden Erfindung.

In einem Ausführungsbeispiel ist daran gedacht, Steuerarm und Tragarm direkt zu verbinden bzw. sogar einstückig herzustellen, was jedoch relativ schwierig ist, da beispielsweise die Klinke nach der DE 38 11 310 C2 noch Bohrungen für eine Drehachse und einen Anschlagstift aufweisen muss. Ferner gibt es noch verschiedene Anformungen an die Klinke, damit eine gesteuerte Bewegung von einer Ruhestellung in eine Bereitschaftsstellung und von einer Bereitschaftsstellung in eine Arbeitsstellung durchgeführt werden kann. Deshalb bietet es sich an, zwischen den eigentlichen Steuerarmen und den Tragarmen einen Grundkörper dazwischen zu schalten. Dieser Grundkörper kann sich in seiner Breite von einer Aussenfläche des Steuerarmes bis zu einer Aussenfläche des Tragarmes erstrecken, da seine Bewegung kein Element der nachfolgenden Klinke stört.

Bevorzugt werden Grundkörper und Steuerarme einstückig aus Kunststoff hergestellt, so dass bereits bei der Herstellung die entsprechenden Bohrungen und Ausnehmungen zur Steuerung der Klinkenbewegung in den Grundkörper bzw. den Steuerarm mit eingeformt werden können. Der Tragarm kann in diesem Fall auch beispielsweise aus einem metallischen Werkstoff bestehen, da er lediglich ein flaches Stanzteil ist. Dieser Tragarm wird in einen Schlitz in den Grundkörper eingeschoben und mit dem Grundkörper über ein beliebiges Befestigungselement, insbesondere einen Niet verbunden. Eine Innenwand des Schlitzes verläuft in etwa einer Ebene einer Innenfläche des Steuerarmes, woraus erkennbar ist, dass Steuerarm und Tragarm versetzt im bzw. am Grundkörper angeordnet sind.

Durch diese Erfindung wird eine einfache Möglichkeit geschaffen, die Tragarme von aufeinander folgenden Klinken einer vertikalen oder auch einer horizontalen Stapelsäule in etwa in einer Ebene verlaufend anzuordnen, so dass Lagergüter immer an denselben Stellen angegriffen werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Figur 1: zwei perspektivische Ansichten einer linken Klinke;
- Figur 2: zwei perspektivische Ansichten einer rechten Klinke;
- Figur 3: einen Ausschnitt aus einer Stapelsäule mit zwei übereinander angeordneten Klinken;
- Figur 4: eine Seitenansicht einer erfindungsgemässen Klinke;
- Figur 5: eine Draufsicht auf die Klinke gemäss Figur 4.

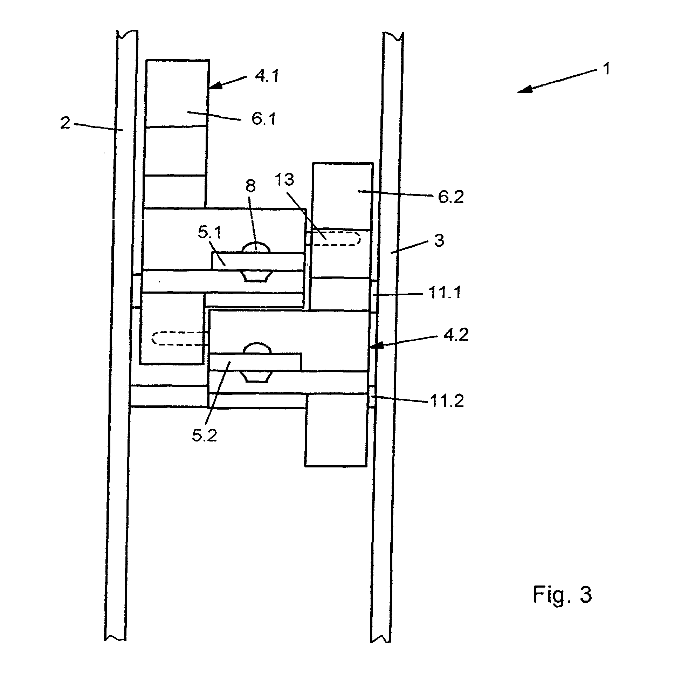

Zur Erläuterung einer Stapelsäule 1 gemäss Figur 3 wird insbesondere auf die DE 38 11 310 C2 Bezug genommen, die auch zum Inhalt der vorliegenden Erfindung gemacht wird. Von dieser Stapelsäule 1 sind in Figur 3 zwei Seitenwangen 2 und 3 angedeutet, zwischen denen zwei Klinken 4.1 und 4.2 drehbar gelagert sind. Die entsprechenden Drehachsen 11.1 und 11.2 durchsetzen die Klinken 4.1 und 4.2 und stecken in den Seitennwangen 2 und 3.

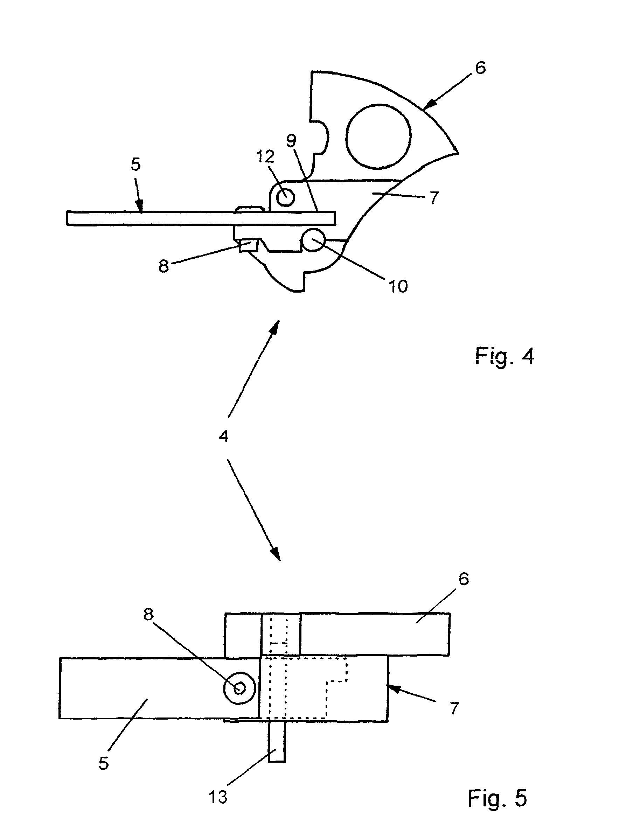

Jede Klinke 4 besteht gemäss den Figuren 4 und 5 aus einem Tragarm 5 und einem Steuerarm 6. Dem Steuerarm 6 ist ein Grundkörper 7 angesetzt, der bevorzugt einstückig mit dem Steuerarm 6 verbunden ist. Eine Verbindung zwischen Grundkörper 7 und Tragarm 5 erfolgt dagegen durch eine Niet 8.

Bevorzugt besteht der Grundkörper 7 bzw. der Steuerarm 6 und der Tragarm 5 aus unterschiedlichen Werkstoffen. Für den Steuerarm 6/Grundkörper 7 bietet sich ein Formen aus Kunststoff an, während für den Tragarm 5 ein metallischer Werkstoff bevorzugt wird. Hier sind aber alle möglichen Variationen denkbar und liegen im Rahmen der Erfindung.

Zur Aufnahme des Tragarmes 5 ist in den Grundkörper 7 ein Schlitz 9 eingeformt, in den der Tragarm 5 vor dem Anbringen des Niets 8 eingeschoben wird. Den Grundkörper 7 durchzieht zum einen eine Bohrung 10 zur Aufnahme der Drehachse 11.1 bzw. 11.2 und zum anderen eine Bohrung 12 zur Aufnahme eines in Figur 3 nur gestrichelt angedeuteten Stiftes 13. Dieser Stift 13 dient als Anschlag für den Steuerarm einer nachfolgenden Klinke.

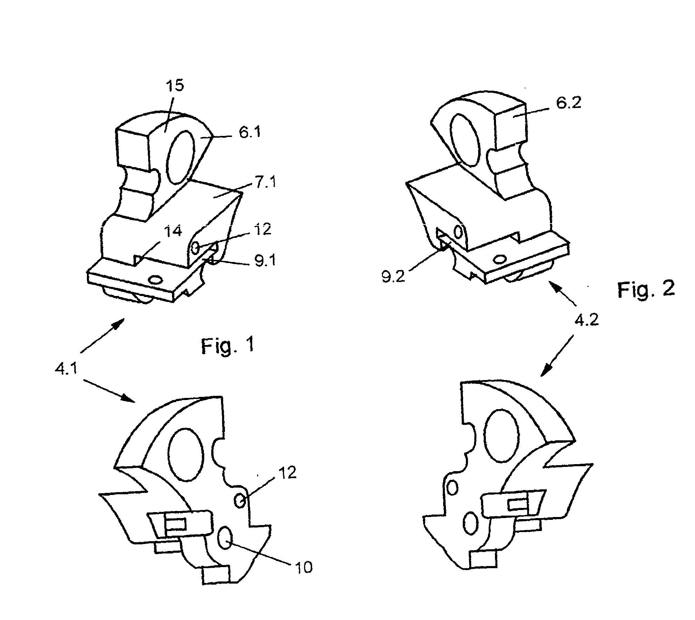

In den Figuren 1 und 2 ist erkennbar, dass für eine Stapelsäule 1 unterschiedliche Klinken 4.1 und 4.2 verwendet werden. Bei einer linken Klinke 4.1 ist dem Grundkorper 7.1 ein Steuerarm 6.1 linksseitig aufgesetzt, während ein Schlitz 9.1 sich rechtsseitig erstreckt. Dabei verläuft eine Innennwand 14 des Schlitzes 9.1 in etwa in der Ebene einer Innenfläche 15 des Steuerarmes 6.1. Bei der rechten Klinke 4.2 ist die Anordnung von Steuerarm 6.2 und Schlitz 9.2 genau umgedreht.

Die Funktionsweise der vorliegenden Erfindung ist folgende:

Gemäss Figur 3 werden übereinander abwechselnd eine linke Klinke 4.1 und eine rechte Klinke 4.2 angeordnet. Dabei liegen die entsprechenden Tragarme 5.1 in etwa in einer Ebene übereinander, während die entsprechenden Steuerarme 6.1 und 6.2 versetzt zu den Tragarmen 5.1 und 5.2 angeordnet sind, so dass sie jeweils an den Grundkörpern der nachfolgenden Klinken vorbeistreifen können. Wichtig ist allein, dass die Tragamre 5.1 und 5.2 in etwa exakt übereinander angeordnet sind.

| **Positionszahlenliste** | | | | | |
|---|---|---|---|---|---|
| 1 | Stapelsäule | 34 | | 67 | |
| 2 | Seitenwange | 35 | | 68 | |
| 3 | " | 36 | | 69 | |
| 4 | Klinke | 37 | | 70 | |
| 5 | Tragarm | 38 | | 71 | |
| 6 | Steuerarm | 39 | | 72 | |
| 7 | Grundkörper | 40 | | 73 | |
| 8 | Niet | 41 | | 74 | |
| 9 | Schlitz | 42 | | 75 | |
| 10 | Bohrung | 43 | | 76 | |
| 11 | Drehachse | 44 | | 77 | |
| 12 | Bohrung | 45 | | 78 | |
| 13 | Stift | 46 | | 79 | |
| 14 | Innenwand | 47 | | | |
| 15 | Innenfläche | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Stapelsäule zum Lagern von Lagergütern über- oder nebeneinander auf Klinken (4), welche einen Tragarm (5) und einen Steuerarm (6) aufweisen, wobei der Steuerarm (6) jeder Klinke (4) versetzt zum Tragarm (5) angeordnet ist und die Steuerarme (6.1, 6.2) aufeinander folgender Klinken (4.1, 4.2) versetzt zueinander angeordnet sind,
**dadurch gekennzeichnet,**
**dass** die Tragarme (5.1, 5.2) der Klinken (4.1, 4.2) in etwa in einer Ebene übereinander angeordnet sind.

2. Stapelsäule nach Anspruch 1, **dadurch gekennzeichnet, dass** der Steuerarm (6) aus Kunststoff und der Tragarm (5) aus einem metallischen Werkstoff besteht.

3. Stapelsäule nach Anspruch 1, **dadurch gekennzeichnet, dass** der Tragarm (5) mit dem Steuerarm (6) über einen Niet (8) verbunden ist.

4. Stapelsäule nach Anspruch 2, **dadurch gekennzeichnet, dass** der Steuerarm (6) über einen Grundkörper (7) mit dem Tragarm (5) verbunden ist.

5. Stapelsäule nach Anspruch 4, **dadurch gekennzeichnet, dass** in den Grundkörper (7) ein Schlitz (9) zur Aufnahme eines Tragarmes (5) eingeformt ist.

6. Stapelsäule nach Anspruch 5, **dadurch gekennzeichnet, dass** der Schlitz (9) mit einer Innenwand (14) in etwa in der Ebene einer Innenfläche (15) des Steuerarmes (6) endet.

7. Stapelsäule nach einem der Ansprüche 4 bis 6, **dadurch gekennzeichnet, dass** der Grundkörper (7) eine Bohrung (10) zur Aufnahme einer Drehachse (11) und eine Bohrung (12) zur Aufnahme eines Anschlagstiftes (13) aufweist.

## Claims

1. Stacking column for storing articles to be stored above or alongside one another on ratchets (4), which have a carrier arm (5) and a control arm (6), the control arm (6) of each ratchet (4) being disposed in an offset manner relative to the carrier arm (5), and the control arms (6.1, 6.2) of successive ratchets (4.1, 4.2) being disposed in an offset manner relative to one another, **characterised in that** the carrier arms (5.1, 5.2) of the ratchets (4.1, 4.2) are disposed above one another substantially in one plane.

2. Stacking column according to claim 1, **characterised in that** the control arm (6) is formed from plastics material, and the carrier arm (5) is formed from a metallic material.

3. Stacking column according to claim 1, **characterised in that** the carrier arm (5) is connected to the control arm (6) via a rivet (8).

4. Stacking column according to claim 2, **characterised in that** the control arm (6) is connected to the carrier arm (5) via a basic body member (7).

5. Stacking column according to claim 4, **characterised in that** a slot (9) is provided in the basic body member (7) to accommodate a carrier arm (5).

6. Stacking column according to claim 5, **characterised in that** the slot (9) ends with an internal wall (14) substantially in the plane of an internal face (15) of the control arm (6).

7. Stacking column according to one of claims 4 to 6, **characterised in that** the basic body member (7) has a bore (10) to accommodate a rotary axle (11) and a bore (12) to accommodate a stop pin (13).

## Revendications

1. Colonne de stockage destinée au stockage de produits à stocker l'un au-dessus ou à côté de l'autre sur des poignées (4) présentant un bras de support (5) et un bras de commande (6), le bras de commande (6) de chaque poignée (4) étant disposé décalé par rapport au bras de support (5) et les bras de commande (6.1, 6.2) de poignées successives (4.1, 4.2) étant disposés décalés l'un par rapport à l'autre,
**caractérisée par le fait que**
les bras de support (5.1, 5.2) des poignées (4.1, 4.2) sont disposés l'un au-dessus de l'autre environ dans un plan.

2. Colonne de stockage selon la revendication 1, **caractérisée par le fait que** le bras de commande (6) est en matière plastique et le bras de support (5) en un matériau métallique.

3. Colonne de stockage selon la revendication 1, **caractérisée par le fait que** le bras de support (5) est relié au bras de commande (6) par l'intermédiaire d'un rivet (8).

4. Colonne de stockage selon la revendication 2, **caractérisée par le fait que** le bras de commande (6) est relié au bras de support (5) par l'intermédiaire d'un corps de base (7).

5. Colonne de stockage selon la revendication 4, **caractérisée par le fait que** dans le corps de base (7) est formée une fente (9) destinée à recevoir un bras de support (5).

6. Colonne de stockage selon la revendication 5, **caractérisée par le fait que** la fente (9) se termine par une paroi intérieure (14) environ dans le plan d'une face intérieure (15) du bras de commande (6).

7. Colonne de stockage selon l'une des revendications 4 à 6, **caractérisée par le fait que** le corps de base (7) présente un alésage (10) destiné à recevoir un axe rotatif (11) et un alésage (12) destiné à recevoir une goupille de butée (13).
